# EUROPEAN PATENT SPECIFICATION

(11) **EP 3 885 416 B1**
(45) Date of publication and mention of the grant of the patent: **16.10.2024**
(21) Application number: 20166290.5
(22) Date of filing: 27.03.2020
(51) Int. Cl.: C09D 105/00, C09D 1/04

(54) **STABILIZING COMPOSITION FOR ENVIRONMENTALLY FRIENDLY BINDER SYSTEMS**
STABILISIERUNGSZUSAMMENSETZUNG FÜR UMWELTFREUNDLICHE BINDEMITTELSYSTEME
COMPOSITION DE STABILISATION POUR SYSTÈMES DE LIAISON SANS DANGER POUR L'ENVIRONNEMENT

(43) Date of publication of application: 29.09.2021
(73) Proprietor: Wöllner GmbH, 67065 Ludwigshafen (DE)
(72) Inventor: Jakovljevic, Ruzica, 68165 Mannheim (DE); Leute, Martin, 3002 Purkersdorf (AT); Krakehl, Joachim, 55543 Bad Kreuznach (DE)
(74) Representative: Müller-Boré & Partner Patentanwälte PartG mbB

(56) References cited:
- WO-A1-2008/137853
- WO-A1-2017/103083
- WO-A1-2019/002311
- WO-A2-2012/098522
- JP-A- 2018 100 318
- US-A1- 2012 231 990

## Description

The present invention relates to the use of a composition as a pH and viscosity stabilizer in a coating composition and the use of a polysaccharide-based biopolymer as a stabilizer in a coating composition.

Today, binder systems are characterized by various properties, e.g. environmental friendliness, being free of organic solvents and VOCs, multi-functionality or optimized processing properties. In order to meet the current far-reaching demands for minimized VOC contents, such systems are consequently designed on a water basis. It is usually necessary to adjust the pH to a certain range, which should not change substantially over the storage time of the binder system.

Commonly used binder systems include organic coating systems and inorganic coating systems.

In the case of organic coating systems, a distinction is made between the use of natural substances, modified natural substances, and plastic products. Harmful substances and irritants can cause health problems and allergies. Therefore, it is very important for the health of people that such substances are avoided in a binder composition which is used in a coating system. Thus, nowadays, modern organic coating systems for the interior are designed such that they do not contain plasticizers, organic solvents or preservatives and, if possible, do not release any harmful emissions into the room air. In order to provide a binder system meeting said requirements and, at the same time, to avoid spoiling of the binder system by microorganisms, organic coating systems have been following the trend to increase the pH of the formulation, making the growth rate of microorganisms significantly slower. In addition to the aforementioned advantages, an alkaline environment based on inorganic binders in an organic coating system helps to increase the porosity, to improve the indoor climate and aids dissolving rheology modifiers.

To set the pH of organic coating systems to an alkaline range, several strategies have been established. For example, the addition of alkaline fillers, alkali hydroxide, amines or siliconate compounds is commonly known.

However, such organic coating systems often have the problem of a shift in the pH and in the variation of the viscosity over time and/or insufficient thixotropy. Formulations require pH buffering or stabilization for a longer storage period. But, depending on the choice of the additive, the pH will shift either upwards or downwards, resulting in the following disadvantages: lack of protection against microorganisms, the obligation of labeling when used in e.g. interior applications and a change in the zeta potential which leads to instability of the paint. Further, the viscosity may significantly increase or decrease over time when using one of these additives. However, constant viscosity is necessary to ensure the processability of the coating composition. In addition, high viscosity fluctuations lead to undesirable hue deviation.

Nevertheless, in inorganic coating systems, the majority of the soluble inorganic binders is based on liquid alkali silicates and hardens due to chemical and physical reactions during air drying. Commonly used inorganic coating systems include silicate paints and plasters. Respective formulations tend to thicken upon storage over a prolonged period of time. Viscosity increases gradually, mainly because calcium and magnesium ions enter into a slow but continuous chemical reaction with the liquid alkali silicates and force crosslinking reactions. As a result, the processing of the coating system becomes more and more difficult until, in the worst case, the processing is no longer possible. If stabilizers are added to the formulation, the undesirable increase in viscosity can mostly be brought under control. Further, unlike organic coating systems, inorganic coating systems lack the organic character and are often more expensive to produce.

However, coating formulations with incompatible raw materials might also induce unwanted interactions between additives, fillers, binders and/or pigments, which could also lead to increased viscosity and thickening during the storage of the product. Furthermore, especially in alkaline hybrid systems based on combinations of inorganic and organic binders even decomposition of the organic binder might take place, which would also influence the resulting viscosity. In addition, hue deviation or staining of the resulting coating may occur.

Thus, the problem underlying the present invention is to provide a composition that can stably maintain an organic or inorganic coating system in a desired alkaline pH range as well as keep the viscosity of the system within a preferred range even over long storage time.

The solution to the above technical problem is achieved by the embodiments characterized in the claims.

The present invention relates to the use of a a composition as a stabilizer of the pH and the viscosity in a coating composition, wherein the composition comprises
at least one type of water glass, and
at least one polysaccharide-based biopolymer,
wherein the molar ratio of SiOz to M₂O in the at least one type of water glass is from 0.1 to 5,
wherein
M is selected from Li, Na, K, and NR₄ and each R is independently H, a linear or branched C₁-C₁₀ alkyl or alkenyl, an aromatic group, or an alicyclic group.

Surprisingly, it has been shown that the combination of the at least one type of water glass and the at least one polysaccharide-based biopolymer in accordance with the present invention has synergetic effects when used in organic and inorganic coating systems, particularly in paints for interior walls. Due to the at least one type of water glass, the pH of a coating system can be accurately adjusted to the alkaline range while the at least one polysaccharide-based biopolymer helps to stabilize the pH. Thus, both the pH and the viscosity/thixotropy can be kept stable over a long period of time.

The composition may be in a solid state or in a liquid state. In one general embodiment, the composition further contains a solvent/dispersant, in particular water, and is in a liquid state. In a further general embodiment, the composition of the present invention is in a liquid state and contains water in an amount of e.g. 2 to 95 mass%, 5 to 90 mass%, or 10 to 85 mass%.

According to the present invention, in the at least one type of water glass, the molar ratio of SiO₂ to M₂O is from 0.1 to 5, wherein M is selected from Li, Na, K, and NR₄ and each R is independently H, a linear or branched C₁-C₁₀ alkyl or alkenyl, an aromatic group, or an alicyclic group.

In general, water glass can be characterized in terms of the molar ratio of SiO₂ to M₂O or the weight ratio of SiO₂ to M₂O. In the present invention, the molar ratio of SiO₂ to M₂O is from 0.1 to 5, preferably from 0.5 to 4 and, more preferably, from 1 to 3.5. By setting the molar ratio of SiO₂ to M₂O to the above range, the pH of a coating system comprising the composition can be easily adjusted to the alkaline range.

In the at least one type of water glass of the present invention, M is selected from Li, Na, K, and NR₄ and each R is independently H, a linear or branched C₁-C₁₀ alkyl or alkenyl, an aromatic group, or an alicyclic group.

The linear or branched C₁-C₁₀ alkyl is not particularly limited. The linear C₁-C₁₀ alkyl is, for example, methyl, ethyl, n-propyl, n-butyl, n-pentyl or n-hexyl. The branched C₁-C₁₀ alkyl is, for example, isopropyl, sec-butyl, isobutyl, tert-butyl or isopentyl.

The linear or branched C₁-C₁₀ alkenyl is not particularly limited and both cis and trans isomers are included. Examples for the linear or branched C₁-C₁₀ alkenyl are ethylenyl, propylenyl, 1-butenyl, 2-butenyl, isobutylenyl, 1-pentenyl, 2-pentenyl, 3-methyl-1-butenyl, 2-methyl-2-butenyl and 2,3-dimethyl-2-butenyl.

The aromatic group is not particularly limited and may be benzyl, tolyl, xylyl or naphthy, for example.

The alicyclic group is not particularly limited. The alicyclic group is, for example, cyclopropyl, cyclobutyl, cyclopentyl, cyclohexyl, cyclopentenyl, and cyclohexenyl.

The linear or branched C₁-C₁₀ alkyl or alkenyl, the aromatic group, and the alicyclic group may be unmodified or modified and may, for example, contain an alkoxylated side chain or one or two amino groups.

M in the at least one type of water glass is selected from Li, Na, K, and NR₄. According to a preferred embodiment, M is selected from Li, Na, and K. In a further preferred embodiment, M is selected from Li and K. By using potassium silicate, the pH of a coating system can be easily adjusted to an alkaline range.

In an embodiment, the at least one type of water glass comprises at least one of potassium silicate having a molar ratio of from 0.5 to 4, sodium silicate having a molar ratio of from 1.5 to 4, and lithium silicate having a molar ratio of from 2.5 to 5. In a preferred embodiment, the at least one type of water glass comprises at least one of potassium silicate having a molar ratio of from 1 to 3.5, sodium silicate having a molar ratio of from 2 to 4, and lithium silicate having a molar ratio of from 2.5 to 3.5. Said specific types of water glass are preferable since they have a favorable SiO₂ content in combination with a high alkali oxide content.

In another preferred embodiment of the stabilizing composition of the present invention, only potassium silicate and/or sodium silicate is/are contained as the at least one type of water glass. In this embodiment, the total amount of potassium silicate, sodium silicate or the combination of potassium silicate and sodium silicate in the stabilizing composition is, for example, in the range of 0.5 to 70 wt%, such as 1 to 65 wt% or 2 to 60 wt%, based on solids.

In the composition the at least one type of water glass is preferably in a liquid state.

According to an embodiment of the present invention, the composition further comprises at least one additive selected from the following group:
- Dispersants: polyphosphates, polyacrylates, phosphonates, naphthene and lignin sulfonates
- Wetting agents: anionic, cationic, amphoteric and nonionic surfactants
- Defoamers: silicon emulsions, hydrocarbons, long-chain alcohols
- Stabilizers: special functional compounds, cationic, anionic, amphoteric or neutral
- Rheological additives (rheology modifiers): cellulose derivatives (CMC, HEC), xanthan gums, polyurethanes, polyacrylates, modified starch, bentone, and other lamellar silicates
- Water repellents: alkyl siliconates, siloxanes, wax emulsions, fatty acid alkali salts

The silicate stabilizer is not particularly limited as long as it can stabilize the silicate. The silicate stabilizer may be selected from a group consisting of tertiary amines, diamines, a mixture of amines, quaternary ammonium salts, alkyl silanes, silicones, siliconates, and other polymer compounds/dispersions.

By using a silicate stabilizer, a complex can be formed with multivalent ions, the formation of polysilicate units having a long chain can be avoided and the decomposition of organic binders can be reduced which avoids an increase in viscosity.

According to an embodiment of the present invention, the composition comprises 1 to 60 wt%, preferably 4 to 50 wt%, of at least one of potassium silicate and sodium silicate, based on solids,
0 to 30 wt%, preferably 1 to 25 wt%, of lithium silicate, based on solids,
0.1 to 40 wt%, preferably 0.15 to 25 wt%, of the polysaccharide-based biopolymer, based on the amount of the active agent,
0 to 30 wt%, preferably 1 to 27 wt%, of the additive, based on the amount of the active agent, and
water.

As the additive of the above composition, in a preferred embodiment, the above-mentioned silicate stabilizer is used. When a composition containing a silicate stabilizer is used in a coating composition for an exterior wall, the weather-resistance can be improved, for example.

The expression "based on solids" means in the present invention the content of the solid part in the water glass. Further, in the present invention, the wording "based on the amount of the active agent" refers to the amount of the polysaccharide based biopolymer or the additive which can be in a solid, liquid or oily state.

The above specific composition can keep both the pH and the rheology (i.e. viscosity and thixotropy) of a coating composition stable over a long period of time.

In view of the above, two typical examples of the composition of the present invention are given in the following Tables 1 and 2.

**Table 1**

| Compound | K₂O [wt%] | Li₂O [wt%] | SiO₂ [wt%] | Molar ratio | Weight ratio | Density [g/cm³] | Viscos-ity [mPa·s (20°C)] | Composition [wt%] |
|---|---|---|---|---|---|---|---|---|
| Potassium silicate | 18.5 | | 30 | 2.5 | 1.6 | 1.53 | 130 | 23 to 45 |
| Lithium silicate | | 2.8 | 22.9 | 4.1 | 8.2 | 1.23 | 40 | 0 to 5.5 |
| Biopolymer | | | | | | | | 3 to 21 |
| Silicate stabilizer | | | | | | | | 0 to 18 |
| water | | | | | | | | add to 100 |
| Sum: | | | | | | | | 100 |

**Table 2**

| Compound | K₂O [wt%] | Li₂O [wt%] | SiO₂ [wt%] | Molar ratio | Weight ratio | Density [g/cm³] | Viscosity [mPa·s (20°C)] | Composition [wt%] |
|---|---|---|---|---|---|---|---|---|
| Potassium silicate | 18.5 | | 30 | 2.5 | 1.6 | 1.53 | 130 | 4.5 to 47 |
| Lithium silicate | | 2.8 | 22.9 | 4.1 | 8.2 | 1.23 | 40 | 0 to 24.5 |
| Biopolymer | | | | | | | | 0.15 to 21 |
| Silicate stabilizer | | | | | | | | 0 to 27 |
| water | | | | | | | | add to 100 |
| Sum: | | | | | | | | 100 |

The polysaccharide-based biopolymer used in the composition of the present invention is not particularly limited.

The polysaccharide-based biopolymer provides the following important functions to the composition of the present invention: it acts as an environmentally friendly pH stabilizer, a sustainable dispersant, a viscosity stabilizer, a complexing agent, a masking agent for Ca²⁺ and Mg²⁺ ions, which may be contained due to water hardness, and a chelating agent. Therefore, the addition of a further dispersing agent in the composition is in principle not necessary.

According to an embodiment, the polysaccharide-based biopolymer has a chain length of from 1 to 100, preferably from 2 to 25 and more preferably from 3 to 10.

In an embodiment of the present invention, the polysaccharide-based biopolymer is a fructan compound. Examples of the fructan compound are inulin, levan, and graminan, or modified versions thereof.

According to a preferred embodiment, the fructan compound is inulin or modified inulin.

Inulin consists of a repetitive fructosyl moiety and chain-terminating glucosyl moieties which are linked by β(2,1) bonds.

Native inulin can be extracted from plant sources such as chicory, Jerusalem artichoke, artichoke, onion, asparagus, black roots, dahlia, dandelion or other daisy family members.

Inulin or modified inulin provides excellent complexing, binding, dispersing and emulsifying properties and can therefore advantageously stabilize the pH of a coating composition.

According to an embodiment of the present invention, the modified inulin can be selected from oxidized inulin, carboxyalkylated inulin, and hydroxyalkylated inulin. In said modified inulin compounds, the hydroxy unit of the repetitive fructosyl of inulin is at least partly modified.

Specifically, in oxidized inulin, a part of the hydroxy units is converted to an aldehyde group. Further, in carboxyalkylated inulin, a part of the hydroxy units is converted to an ether group bonded to a carboxyalkyl group. In addition, in hydroxyalkylated inulin, in a part of the hydroxy groups, hydrogen is substituted by an alkyl group.

In a preferred embodiment, the carboxyalkylated inulin is carboxymethylated inulin. Carboxymethylated inulin can, for example, be obtained from a root extract of chicory (Cichorium intybus).

According to a preferred embodiment of the present invention, the polysaccharide-based biopolymer is carboxymethylated inulin. Carboxymethylated inulin provides an excellent stabilizing effect on the pH in the alkaline range in combination with soluble silicates.

The present invention further relates to the use of the abovedefined composition in a coating composition.

By using the composition according to the present invention in the coating composition, the pH can be readily adjusted to the alkaline range. In an embodiment, the coating composition has a pH in a range of from 9 to 14, preferably in a range of from 10 to 14, more preferably in a range of from 10.5 to 12. According to the present invention, the pH value can be kept extremely stable.

Further, according to an embodiment of the present invention, the coating composition comprises 0.1 to 10 wt%, preferably 0.2 to 7.5 wt%, more preferably 0.25 to 5 wt%, of the composition.

The coating composition can be used for both interior and exterior applications and in both organic and inorganic coating systems.

Due to the specific combination of the at least one type of water glass, and the at least one polysaccharide-based biopolymer, the coating composition can avoid the EUH 208 statement and meets the requirements of actual RAL UZ 102 which are particularly important when the coating composition is used for an interior wall paint. In addition, based on the advantageous properties according to the present invention, the present invention can lead to final coating compositions which are free of alkylphenol ethoxylates (APEO) or VOC and furthermore also labeling according to the CLP regulation can be avoided. Certainly, this is only true if the remaining components do not provide the afore-mentioned negative effects.

In an embodiment of the present invention, the coating composition further comprises at least one plastic. The at least one plastic is not particularly limited and may be selected, for example, from the group consisting of acrylic ester copolymers (pure acrylates), acrylic ester-styrene copolymers such as a styrene-acrylate copolymer and homopolymers or copolymers on the basis of vinyl acetate such as an ethylene-vinyl acetate copolymer, a terpolymer of ethylene-vinyl acetate-vinyl chloride, a terpolymer of neodecanoic acid-vinyl acetate-vinyl ester, a maleic acid ester-vinyl acetate copolymer, a polyurethane, a silicone, an acrylic ester-vinyl acetate copolymer and a sustainable binder based on renewable natural sources.

According to a preferred embodiment, the at least one plastic is an acrylic ester-styrene copolymer and/or a homopolymer or a copolymer on the basis of vinyl acetate.

The at least one plastic can particularly impart weather-resistance, impact-resistance and/or water-repellency to a coating composition such as paint. However, the at least on plastic may provide further properties known to a person skilled in the corresponding technical field.

The present invention further relates to the use of the above composition as a stabilizer in a coating composition.

The composition comprising the specific combination of the at least one type of water glass and the at least one polysaccharide-based biopolymer can be used in different types of coating compositions such as an organic coating system and an inorganic coating system, as well as adhesives, facings, sizes, and the like.

In particular, the pH of an organic coating system can be adjusted to the alkaline range by using the composition while said organic coating system maintains its organic character. This means in detail that, for example, an emulsionbased interior wall paint does not substantially change in appearance and processing properties.

Specific examples of a coating composition in accordance with the present invention, without being limited thereto, are emulsion paints, silicone paints, lime paints, glue and adhesive paints, latex paints, artists' colors, DIY paints, clay paints, fire protection paints, building paints, glazes, impregnations, industrial paints, road marking paints, wall paints, acrylic plasters, emulsion plasters, silicone resin plasters, SiSi plasters, primers, water repellents, oleophobing agents, spackling pastes and coating compositions on the basis of soluble silicates, silicate-emulsions, organo-silanes, silicones, and sol-silicate.

Further, the at least one polysaccharide-based biopolymer functions as a complexing agent for Ca²⁺ and Mg²⁺ ions which is particularly advantageous in inorganic coating systems and provides stable properties of the final product.

In another aspect, the present invention further relates to the use of the above-mentioned polysaccharide-based biopolymer as a stabilizer in a coating composition.

According to the present invention, it has been surprisingly found that various paint and coating compositions can be effectively adjusted and buffered in pH by using specific types of water glass in combination with a polysaccharide-based biopolymer as an additive. The advantageous synergistic effects achieved through the combination of water glass and said polysaccharide-based biopolymer further result in a prolonged shelf life by suppressing microbiological growth and simultaneously maintaining excellent properties concerning rheological characteristics (viscosity/thixotropy).

### Figures

Figure 1 shows a column diagram relating to the pH values measured for various paint compositions in time intervals from 1 day to 26 weeks.
Figure 2 shows a column diagram relating to the pH difference measured in various paint compositions after storage of 1 day and 26 weeks.
Figure 3 shows a column diagram relating to the viscosity stability measured for various paint compositions after 1 week and after 16 weeks.
Figures 4 and 5 show diagrams relating to the hysteresis area measured for various paint compositions, indicating the respective thixotropic properties thereof.

Further, the present invention is more specifically illustrated by the following examples. However, the present invention is not limited to those examples.

### Compounds and compositions

In the following Examples the below compounds and compositions are used:
- Standard dispersion paint (no preservatives)

| Raw materials | Formula SA-0 [wt %] | Producer |
|---|---|---|
| Water | 35,07 | - |
| Sodium hydroxide 10% | 0,15 | - |
| Dispex AA 4135 | 0,5 | BASF SE |
| Tylose HS 30.000YP2 | 0,35 | SE Tylose GmbH & Co KG |
| Agitan 352 | 0,1 | Münzing Chemie GmbH |
| Kronos 2190 | 15,0 | Kronos GmbH |
| Omyacarb 10 GU | 8,0 | Omya GmbH |
| Omyacarb 2 GU | 10,4 | Omya GmbH |
| Dorkafil Pro-Void | 10,0 | Dorfner GmbH & Co KG |
| Dorkafil H | 7,0 | Dorfner GmbH & Co KG |
| Acronal S559 | 13,0 | BASF SE |
| Tafigel 48 | 0,18 | Münzing Chemie GmbH |
| BorchiGel N75 | 0,15 | OMG Borchers GmbH |
| Agitan 352 | 0,1 | Münzing Chemie GmbH |
| Total: | 100,0 | |

- Water glass A: potassium silicate
molar ratio SiO₂/K₂O = 2.5
K₂O = 18.5 %
SiO₂ = 30.0 %

- Biopolymer: carboxymethyl inulin, sodium salt solution DEQUEST^{®} PB11625D

### Example 1: pH stability

In a long-term pH stability test, four individual test compositions were prepared according to the following Table 3 (all values are given in mass% of the components as such).

**Table 3**

| Composition | dispersion paint | water glass A | biopolymer |
|---|---|---|---|
| SA-0 | 100 | 0 | 0 |
| SA-1 | 97,95 | 2,05 | 0 |
| SA-2 | 99,35 | 0 | 0,65 |
| SA-12 | 97,3 | 2,05 | 0,65 |

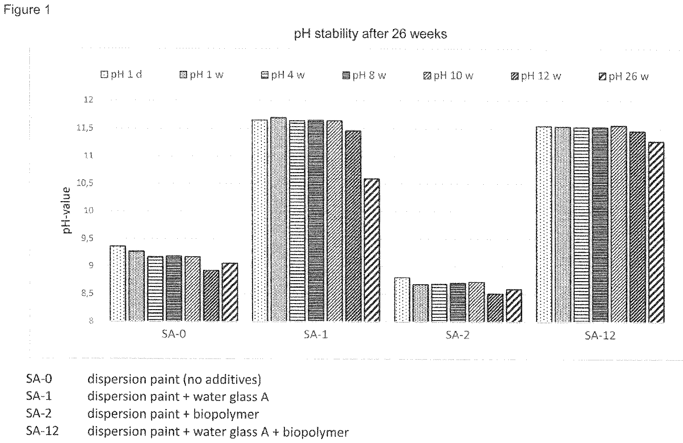

From each paint composition, samples were taken after 1 day, 1 week, 3 weeks, 8 weeks, 10 weeks, 12 weeks and 26 weeks, respectively. For each of these samples, the pH values were determined using a pH meter (pH-Meter 766 Calimatic, Knickl T= 20-22,5°C) and plotted into the column diagram shown in Figure 1.

As can be taken from the results shown in Figure 1, sample SA-12, which contains a combination of water glass A (potassium silicate having a molar ratio SiO₂/K₂O = 2.5) and carboxymethyl inulin (CMI) as a polysaccharide-based biopolymer, shows an extremely high pH stability in the desired alkaline pH range of about pH 10 to 11.5.

Sample SA-2 (no water glass, biopolymer) was able to stabilize the pH, however, only in a rather undesired range of pH 7 to 9.

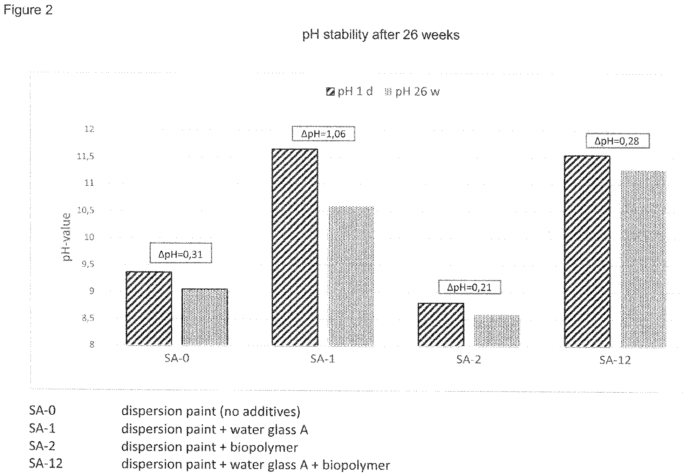

In this context, Figure 2 shows a column diagram in which the pH value drop between storage for 1 day and 26 weeks is shown.

### Example 2: Rheology

### 2.1 Viscosity properties

The viscosities of the four paint compositions shown in the above Table 3 were measured after storage periods of 1 week and 16 weeks. Measurement of the viscosities was carried out by using a Physika MCR 51 rheometer and a coaxial cylinder CC27-3776 at a temperature of T=20°C.

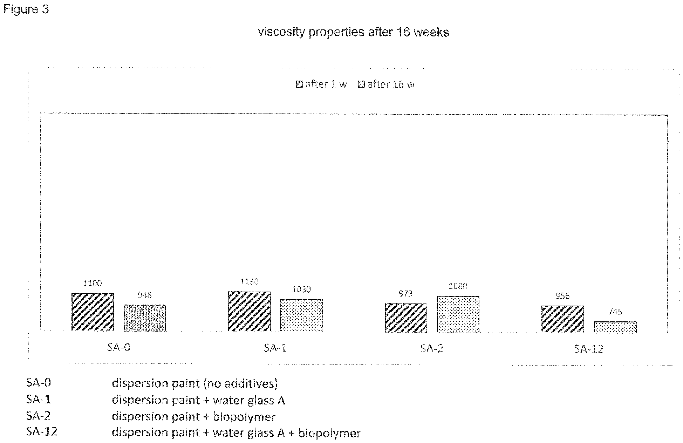

The results of this measurement are shown in the diagram in Figure 3. As can be taken from this diagram, the viscosity of paint composition SA-12, which contains water glass A and a biopolymer, the viscosity slightly decreased within the time period of 16 weeks, which is in accordance with the desired behavior of the untreated paint SA-0.

### 2.2 Thixotropy

In order to determine the thixotropic properties of the individual paint compositions given in the above Table 3, the respective hysteresis areas were determined. These measurements were carried out by using a Physika MCR 51 rheometer and a coaxial cylinder CC27-3776 at a temperature of T=20°C.

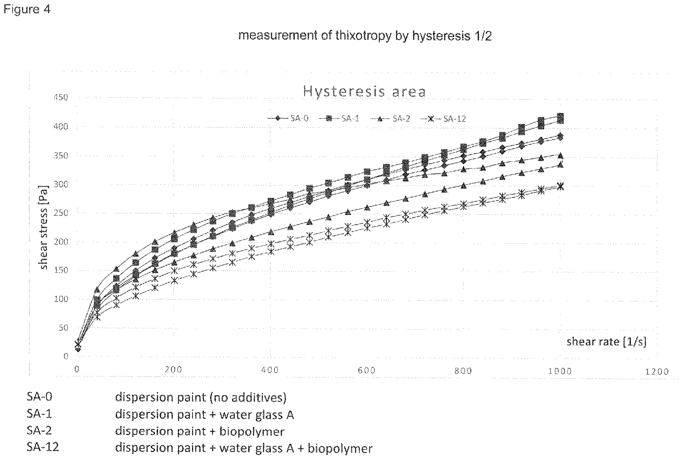

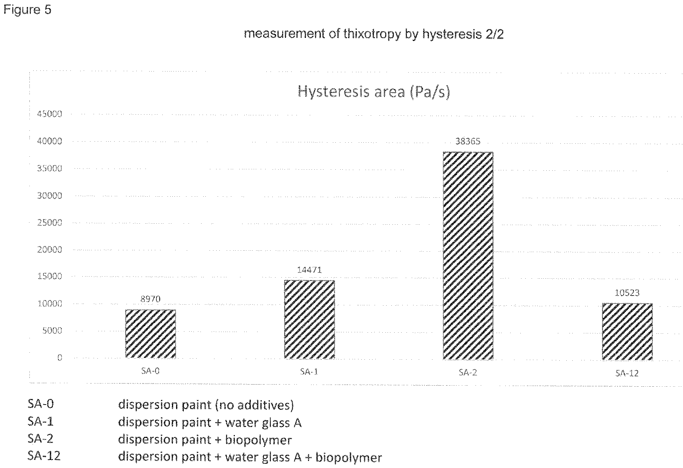

The results are given in the diagram shown in Figures 4 and 5 and are summarized in the following Table 4.

**Table 4: values of hysteresis area**

| SA-0 | SA-1 | SA-2 | SA-12 |
|---|---|---|---|
| 8,970 Pa/s | 14,471 Pa/s | 38,365 Pa/s | 10,523 Pa/s |

In this long-term test, it could be seen that the use of only water glass or only biopolymer as an additive resulted in an increase in hysteresis area, while the combination of both apparently results in a synergistic effect, thus maintaining the hysteresis area on the desired level (standard dispersion paint SA-0).

In particular, after approximately 4 months, sample paint SA-12 advantageously shows a very similar thixotropy compared to the standard dispersion paint SA-0.

On the other hand, sample paints SA-1 (water glass A, no biopolymer) and SA-2 (no water glass, only biopolymer) show significantly increased thixotropies.

### Example 3: Microbiologic growth

### 3.1 Storage test (6 months)

Sample TF-0 was prepared as a standard dispersion paint without preservative. In this case, it wasn't useful to run a complete microbiological test for sample TF-0 since the sample was visibly contaminated with microorganisms already after a few days.

Sample TF-1 was prepared from a paint composition according to the following Table 5 (all values are given in mass% of the components as such). Sample TF-1 was used for determining the microbiologic status after certain storage periods.

**Table 5: composition of samples TF-0 and TF-1**

| Sample | dispersion paint | water glass A | biopolymer |
|---|---|---|---|
| TF-0 | 100 | 0 | 0 |
| TF-1 | 97,46 | 2,00 | 0,54 |

After preparation, sample TF-1 was then stored and was analyzed (total aerobic counts) for aerobic bacteria as well as yeast/mold growth after time periods of 1 month, 2 months, 3 months, 6 months and 9 months. The results are shown in the following Table 6.

**Table 6: storage test after 9 months / microbiologic status**

| Sample | Aerobic bacteria (cfu/g) | Yeast/Mold (cfu/g) | time period |
|---|---|---|---|
| TF-1 | < 100 | < 100 | after 1 month |
| TF-1 | < 100 | < 100 | after 2 months |
| TF-1 | < 100 | < 100 | after 3 months |
| TF-1 | < 100 | < 100 | after 6 months |
| TF-1 | < 100 | < 100 | after 9 months |

As a result of the storage test, it can be observed that during a storage period of 9 months the microbiological growth was below the detection limit for sample TF-1.

### 3.2 Repetitive inoculation test

Sample TF-1 according to the above Table 5 was repetitively inoculated with a bacterial mixture of *Bacillus subtilis, Pseudomonas fluorescens* and *Escherichia coli (K12).* For inoculation with yeast/mold a mixture of *Aspergillus brasiliensis* and *Saccharomyces cerevisiae* was used.

The method used is transferred from a method for testing the microbiological stability of a cosmetic product. An amount of a sample (25g up to 100g) is inoculated with a bacteria or yeast mould suspension. Strains are adapted to non-cosmetic products. The inoculum of the samples was 10⁵ up to 10⁶ cfu/g. After a storage time of 7d a microbiological investigation was carried out to determine the microbiological growth in the respective samples. Tests for microbiological contamination were conducted according to the method mentioned in European Pharmacopoeia 1997 for non-sterile products. The procedure was repeated 6 times.

The resulting effect is assessed on the basis of the growth of the microorganisms. If no significant microbiological growth over a period of 6 weeks is determined, the product shows good stability against microbiological based contamination.

The number of grown bacteria and yeast/mold cells was determined after certain time intervals and is given in the below Tables 7 and 8, respectively.

**Table 7: bacterial cell count after storage**

| Sample | 2 weeks | 4 weeks | 6 weeks | remaining [%] |
|---|---|---|---|---|
| TF-1 | 10³ | 10⁴ | 10³ | 0,1 |

**Table 8: yeast/mold cell count after storage**

| Sample | 2 weeks | 4 weeks | 6 weeks | remaining [%] |
|---|---|---|---|---|
| TF-1 | 10² | 10² | < 10 | 0,1 |

Results show clearly that there is no significant increase in the microbiological growth. Therefore, a stabilizing effect can clearly be seen, when comparing the paint composition of sample TF-1 with the standard paint composition of sample TF-0, whereof the latter already showed significant microbial growth after a few days.

### 3.3 Storage test (9 months)

Samples VA-0 and VA-16 were prepared according to the details given in the following Table 9 (all values are given in mass% of the components as such).

**Table 9: composition of samples VA-0 and VA-16**

| Sample | dispersion paint | water glass A | Biopolymer |
|---|---|---|---|
| VA-0 | 100 | 0 | 0 |
| VA-16 | 96,55 | 2,7 | 0,75 |

Samples VA-0 and VA-16 were then stored and were analyzed for aerobic and anaerobic bacteria as well as for yeast/mold growth after time periods of 3 months, 4 months and 9 months. The results are shown in the following Table 10.

**Table 10: storage test after 6 months / microbiologic status**

| Sample | Aerobic bacteria (cfu/g) | Anaerobic bacteria (cfu/g) | Yeast/Mold (cfu/g) | time period |
|---|---|---|---|---|
| VA-0 | 3d: 1.8 × 10⁸ | 3d: < 100 | 3d: 1.0 × 10⁴ | after 3 months |
| VA-16 | 3d: < 100 | 3d: < 100 | 3d: < 100 | |
| VA-0 | 3d: 8.0 × 10⁷ | 3d: 3.0 × 10⁴ | 3d: 5.4 × 10⁵ | after 4 months |
| VA-16 | 3d: < 100 | 3d: < 100 | 3d: < 100 | |
| VA-0 | 4d: 1.8 × 10⁸ | 4d: 2.5 × 10⁴ | 3d: 1.6 × 10⁶ | after 9 months |
| VA-16 | 4d: < 100 | 4d: < 100 | 3d: < 100 | |

As a result of the storage test, it can be observed that during a total storage period of 9 months significant microbiological growth was observed for sample VA-0 (no additive), while the microbiological growth in sample VA-16 (water glass A and biopolymer) was below the detection limit.

## Claims

1. Use of a composition as a stabilizer of the pH and the viscosity in a coating composition, wherein the composition comprises
at least one type of water glass, and
at least one polysaccharide-based biopolymer,
wherein the molar ratio of SiO₂ to M₂O in the at least one type of water glass is from 0.1 to 5,
wherein
M is selected from Li, Na, K, and NR₄ and each R is independently H, a linear or branched C₁-C₁₀ alkyl or alkenyl, an aromatic group, or an alicyclic group,
wherein the coating composition is an emulsion paint, a silicone paint, a lime paint, a glue and adhesive paint, a latex paint, an artists' color, a DIY paint, a clay paint, a building paint, a glaze, an impregnation, an industrial paint, a road marking paint, a wall paint, an acrylic plaster, an emulsion plaster, a silicone resin plaster, a SiSi plaster, a primer, a water repellent, an oleophobing agent, a spackling paste or a coating composition on the basis of soluble silicates, silicate-emulsions, organo-silanes, silicones, or sol-silicate.

2. The use of a composition as a stabilizer of the pH and the viscosity in a coating composition according to claim 1,
wherein the composition further comprises at least one additive selected from a dispersant, a defoamer, a rheology modifier, a thickener, a hydrophobing agent, and a silicate stabilizer.

3. The use of a composition as a stabilizer of the pH and the viscosity in a coating composition according to claim 2, wherein the composition comprises 1 to 60 wt% of at least one of potassium silicate and sodium silicate, based on solids,
0 to 30 wt% of lithium silicate, based on solids,
0.1 to 40 wt% of the polysaccharide-based biopolymer, based on the amount of the active agent,
0 to 30 wt% of the additive, based on the amount of the active agent, and water.

4. The use of a composition as a stabilizer of the pH and the viscosity in a coating composition according to any one of claims 1 to 3,
wherein the at least one type of water glass comprises at least one of potassium silicate having a molar ratio of from 0.5 to 4, sodium silicate having a molar ratio of from 1.5 to 4, and lithium silicate having a molar ratio of from 2.5 to 5.

5. The use of a composition as a stabilizer of the pH and the viscosity in a coating composition according to any one of claims 1 to 4,
wherein the polysaccharide-based biopolymer has a chain length of from 1 to 100.

6. The use of a composition as a stabilizer of the pH and the viscosity in a coating composition according to any one of claims 1 to 5,
wherein the polysaccharide-based biopolymer is a fructan compound.

7. The use of a composition as a stabilizer of the pH and the viscosity in a coating composition according to claim 6,
wherein the fructan compound is inulin or modified inulin.

8. The use of a composition as a stabilizer of the pH and the viscosity in a coating composition according to claim 7,
wherein the modified inulin is selected from oxidized inulin, carboxyalkylated inulin, and hydroxyalkylated inulin.

9. The use of a composition as a stabilizer of the pH and the viscosity in a coating composition according to claim 8,
wherein the modified inulin is carboxymethylated inulin.

## Patentansprüche

1. Verwendung einer Zusammensetzung als Stabilisator für den pH-Wert und die Viskosität in einer Beschichtungszusammensetzung, wobei die Zusammensetzung umfasst:
mindestens eine Art von Wasserglas, und
mindestens ein Biopolymer auf Polysaccharidbasis,
wobei das molare Verhältnis von SiO₂ zu M₂O in der mindestens einen Art von Wasserglas zwischen 0,1 und 5 liegt,
wobei
M ausgewählt ist aus Li, Na, K und NR₄, und jedes R unabhängig voneinander H, eine lineare oder verzweigte C₁-C₁₀-Alkyl- oder Alkenylgruppe, eine aromatische Gruppe oder eine alicyclische Gruppe ist,
wobei die Beschichtungszusammensetzung eine Dispersionsfarbe, eine Silikonfarbe, eine Kalkfarbe, eine Leim- und Haftmittelfarbe, eine Latexfarbe, eine Künstlerfarbe, eine DIY-Farbe, eine Lehmfarbe, eine Baufarbe, eine Lasur, eine Imprägnierung, eine Industriefarbe, eine Straßenmarkierungsfarbe, eine Wandfarbe, ein Acrylputz, ein Dispersionsputz, ein Silikonharzputz, ein SiSi-Putz, eine Grundierung, ein Wasserabweisungsmittel, ein Oleophobierungsmittel, eine Spachtelmasse oder eine Beschichtungszusammensetzung auf Basis von löslichen Silikaten, Silikat-Emulsionen, Organosilanen, Silikonen oder Sol-Silikaten ist.

2. Verwendung einer Zusammensetzung als Stabilisator für den pH-Wert und die Viskosität in einer Beschichtungszusammensetzung gemäß Anspruch 1,
wobei die Zusammensetzung weiter mindestens ein Additiv umfasst, das aus einem Dispergiermittel, einem Entschäumer, einem Rheologiemodifikator, einem Verdickungsmittel, einem Hydrophobierungsmittel und einem Silikatstabilisator

3. Verwendung einer Zusammensetzung als Stabilisator für den pH-Wert und die Viskosität in einer Beschichtungszusammensetzung gemäß Anspruch 2, wobei die Zusammensetzung umfasst:
1 bis 60 Gew.-% von mindestens einem aus Kaliumsilikat und Natriumsilikat, bezogen auf Feststoffe,
0 bis 30 Gew.-% Lithiumsilikat, bezogen auf Feststoffe,
0,1 bis 40 Gew.-% des Biopolymers auf Polysaccharidbasis, bezogen auf die Menge des aktiven Mittels,
0 bis 30 Gew.-% des Additivs, bezogen auf die Menge des aktiven Mittels, und Wasser.

4. Verwendung einer Zusammensetzung als Stabilisator für den pH-Wert und die Viskosität in einer Beschichtungszusammensetzung gemäß einem der Ansprüche 1 bis 3,
wobei die mindestens eine Art von Wasserglas mindestens eines von Kaliumsilikat mit einem molaren Verhältnis von 0,5 bis 4, Natriumsilikat mit einem molaren Verhältnis von 1,5 bis 4 und Lithiumsilikat mit einem molaren Verhältnis von 2,5 bis 5 umfasst.

5. Verwendung einer Zusammensetzung als Stabilisator für den pH-Wert und die Viskosität in einer Beschichtungszusammensetzung gemäß einem der Ansprüche 1 bis 4,
wobei das Biopolymer auf Polysaccharidbasis eine Kettenlänge von 1 bis 100 aufweist.

6. Verwendung einer Zusammensetzung als Stabilisator für den pH-Wert und die Viskosität in einer Beschichtungszusammensetzung gemäß einem der Ansprüche 1 bis 5,
wobei das Biopolymer auf Polysaccharidbasis eine Fruktanverbindung ist.

7. Verwendung einer Zusammensetzung als Stabilisator für den pH-Wert und die Viskosität in einer Beschichtungszusammensetzung gemäß Anspruch 6,
wobei die Fruktanverbindung Inulin oder modifiziertes Inulin ist.

8. Verwendung einer Zusammensetzung als Stabilisator für den pH-Wert und die Viskosität in einer Beschichtungszusammensetzung gemäß Anspruch 7,
wobei das modifizierte Inulin aus oxidiertem Inulin, carboxyalkyliertem Inulin und hydroxyalkyliertem Inulin ausgewählt ist.

9. Verwendung einer Zusammensetzung als Stabilisator für den pH-Wert und die Viskosität in einer Beschichtungszusammensetzung gemäß Anspruch 8,
wobei das modifizierte Inulin carboxymethyliertes Inulin ist.

## Revendications

1. Utilisation d'une composition comme stabilisant du pH et de la viscosité dans une composition de revêtement, où la composition comprend
au moins un type de verre soluble, et
au moins un biopolymère à base de polysaccharide,
où le rapport molaire de SiO₂ à M₂O dans le au moins un type de verre soluble est de 0,1 à 5,
où
M est choisi parmi Li, Na, K, et NR₄ et chaque R est indépendamment H, un alkyle ou alcényle C₁-C₁₀ linéaire ou ramifié, un groupe aromatique, ou un groupe alicyclique, où la composition de revêtement est une peinture en émulsion, une peinture au silicone, une peinture à la chaux, une peinture à la colle et adhésive, une peinture au latex, une couleur pour artistes, une peinture de bricolage, une peinture à l'argile, une peinture de construction, un vernis, une imprégnation, une peinture industrielle, une peinture de marquage routier, une peinture murale, un enduit acrylique, un enduit en émulsion, un enduit à base de résine de silicone, un enduit SiSi, un apprêt, un hydrofuge, un agent oléophobant, une pâte de rebouchage ou une composition de revêtement à base de silicates solubles, d'émulsions de silicate, d'organosilanes, de silicones ou de sol-silicate.

2. Utilisation d'une composition comme stabilisant du pH et de la viscosité dans une composition de revêtement selon la revendication 1,
où la composition comprend en outre au moins un additif choisi parmi un dispersant, un antimousse, un modificateur de rhéologie, un épaississant, un agent hydrophobe et un stabilisateur de silicate.

3. Utilisation d'une composition comme stabilisant du pH et de la viscosité dans une composition de revêtement selon la revendication 2, où la composition comprend
1 à 60 % en poids d'au moins un parmi le silicate de potassium et le silicate de sodium, sur la base de solides,
0 à 30 % en poids de silicate de lithium, sur la base de solides,
0,1 à 40 % en poids du biopolymère à base de polysaccharide, sur la base de la quantité de l'agent actif,
0 à 30 % en poids de l'additif, sur la base de la quantité de l'agent actif, et de l'eau.

4. Utilisation d'une composition comme stabilisant du pH et de la viscosité dans une composition de revêtement selon l'une quelconque des revendications 1 à 3,
où le au moins un type de verre soluble comprend au moins un parmi un silicate de potassium ayant un rapport molaire de 0,5 à 4, un silicate de sodium ayant un rapport molaire de 1,5 à 4, et un silicate de lithium ayant un rapport molaire de 2,5 à 5.

5. Utilisation d'une composition comme stabilisant du pH et de la viscosité dans une composition de revêtement selon l'une quelconque des revendications 1 à 4,
où le biopolymère à base de polysaccharide a une longueur de chaîne de 1 à 100.

6. Utilisation d'une composition comme stabilisant du pH et de la viscosité dans une composition de revêtement selon l'une quelconque des revendications 1 à 5,
où le biopolymère à base de polysaccharide est un composé de fructane.

7. Utilisation d'une composition comme stabilisant du pH et de la viscosité dans une composition de revêtement selon la revendication 6,
où le composé de fructane est l'inuline ou l'inuline modifiée.

8. Utilisation d'une composition comme stabilisant du pH et de la viscosité dans une composition de revêtement selon la revendication 7,
où l'inuline modifiée est choisie parmi l'inuline oxydée, l'inuline carboxyalkylée et l'inuline hydroxyalkylée.

9. Utilisation d'une composition comme stabilisant du pH et de la viscosité dans une composition de revêtement selon la revendication 8,
où l'inuline modifiée est de l'inuline carboxyméthylée.
